# EUROPÄISCHE PATENTANMELDUNG

(11) **EP 0 800 281 A2**
(43) Veröffentlichungstag der Anmeldung: **08.10.1997**
(21) Anmeldenummer: 97105486.1
(22) Anmeldetag: 02.04.1997
(51) Int. Cl.: H04B 1/38, H04B 1/20

(54) **Verbindungskabel zum Anschluss von Komponenten an einen Rundfunkempfänger mit integrierter Fernsprecheinrichtung**

(30) Priorität: 06.04.1996 DE 19613879
(71) Anmelder: ROBERT BOSCH GMBH, 70442 Stuttgart (DE)
(72) Erfinder: Reichstein, Martin, 31137 Hildesheim (DE); Peter, Bernd, 31135 Hildesheim (DE)

(57) **Zusammenfassung**

Es wird ein Verbindungskabel (80,81) vorgeschlagen, das zum Anschluß von Komponenten (15,20,30,35) an einen Rundfunkempfänger (1) mit integrierter Fernsprecheinrichtung (5) dient. Das Verbindungskabel (80,81) weist eine Steckkontaktanordnung (55,60) zum Anschluß der Komponenten (15,20,30,35) an einen entsprechenden Steckplatz (40,45) des Rundfunkempfängers (1) auf. Das Verbindungskabel (80,81) umfaßt mehrere vorzugsweise mehrpolige Verbindungsleitungen (75,76,77,78) zum Anschluß der Komponenten (15,20,30,35). Mindestens eine Verbindungsleitung (77,78) weist an ihrem der Steckkontaktanordung (55,60) abgewandten Ende einen weiteren Steckplatz (65,70), insbesondere zum Anschluß eines weiteren Verbindungskabels (82) auf. Über mindestens eine der Verbindungsleitungen (75,76,77,78) findet ein Datenaustausch zwischen der angeschlossenen Komponente (20,35) und einer im Rundfunkempfänger (1) integrierten Steuerschaltung (10) statt, wobei der Datenaustausch der Detektion der Komponente (20,35) in der Steuerschaltung (10) und der Ansteuerung der Komponente (20,35) durch die Steuerschaltung (10) dient.

## Beschreibung

### Stand der Technik

Die Erfindung geht von einem Verbindungskabel nach der Gattung des Hauptanspruchs aus.

Es ist bereits bekannt, an eine in einem als Autoradio ausgebildeten Rundfunkempfänger integrierte Steuereinheit Komponenten über verschiedenartige Kabelverbindungen anzuschließen. Dabei ist an einen Anschluß immer nur eine Komponente anschließbar.

### Vorteile der Erfindung

Das erfindungsgemäße Verbindungskabel mit den Merkmalen des Hauptanspruchs hat demgegenüber den Vorteil, daß an einen Anschluß des Rundfunkempfängers mehrere Komponenten angeschlossen werden können.

Vorteilhaft ist außerdem, daß mindestens eine Verbindungsleitung an ihrem der Steckkontaktanordnung abgewandten Ende einen weiteren Steckplatz, insbesondere zum Anschluß eines weiteren Verbindungskabels aufweist. Auf diese Weise ist ein kaskadierbares Stecksystem realisierbar, wodurch eine relativ einfache und sehr schnelle Verbindung und Kontaktierung der Komponenten mit dem Rundfunkempfänger hergestellt werden kann, so daß der Zeitaufwand für den Einbau des Rundfunkempfängers insbesondere in ein Kraftfahrzeug stark verringert wird.

Durch die in den Unteransprüchen aufgeführten Maßnahmen sind vorteilhafte Weiterbildungen und Verbesserungen des im Hauptanspruch angegebenen Verbindungskabels möglich.

Vorteilhaft ist der Datenaustausch zwischen der angeschlossenen Komponente und einer im Rundfunkempfänger integrierten Steuerschaltung, wobei der Datenaustausch der Detektion der Komponente in der Steuerschaltung und der Ansteuerung der Komponente durch die Steuerschaltung dient. Auf diese Weise ist eine störungsfreie Koordination der Komponenten durch die Steuerschaltung auch dann gewährleistet, wenn mehrere Komponenten über ein Verbindungskabel an einen einzigen Anschluß des Rundfunkempfängers angeschlossen sind.

Vorteilhaft ist außerdem, daß durch Integration des Rundfunkempfängers, der Fernsprecheinrichtung und der Steuerschaltung in ein einziges Gerätemodul Platz, Material und Kosten eingespart werden.

Vorteilhaft ist die Stromversorgung der entsprechend angeschlossenen Komponente über mindestens eine der Verbindungsleitungen. Auf diese Weise werden zusätzlich Stromversorgungszuleitungen eingespart.

Vorteilhaft ist die Einführung einer externen Stromversorgung in mindestens einen weiteren Steckplatz einer Verbindungsleitung. Auf diese Weise kann unabhängig der vom Rundfunkempfänger gelieferten Stromversorgung eine komponentenspezifische Stromversorgung in das Steckverbindungssystem eingespeist werden. Dadurch läßt sich ebenfalls Verkabelungsaufwand einsparen.

### Zeichnung

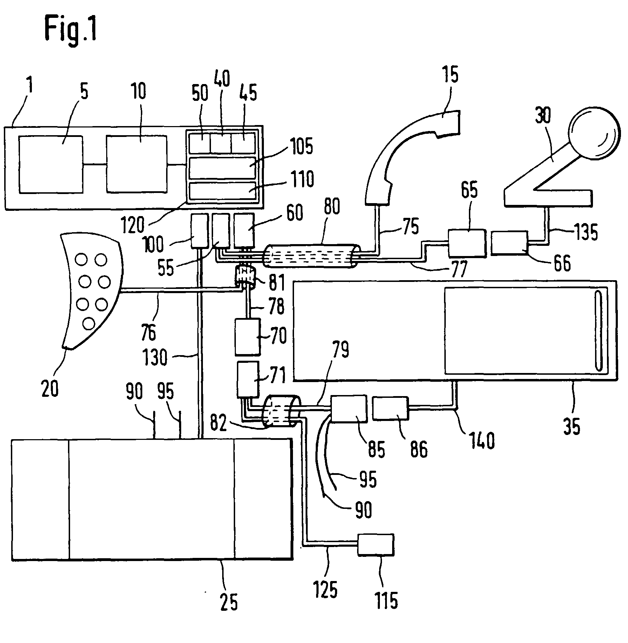

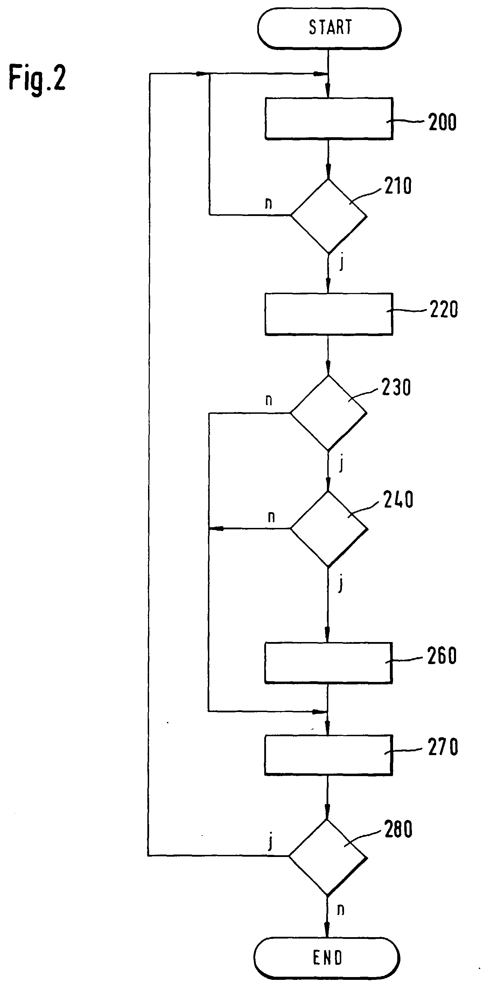

Ein Ausführungsbeispiel der Erfindung ist in der Zeichnung dargestellt und in der nachfolgenden Beschreibung näher erläutert. Es zeigt Figur 1 ein Rundfunkempfangssystem mit mehreren an einen Rundfunkempfänger anschließbaren Komponenten und Figur 2 einen Ablaufplan für die Funktionsweise der Steuerschaltung des Rundfunkempfängers.

### Beschreibung des Ausführungsbeispiels

Figur 1 zeigt einen Rundfunkempfänger 1 mit integrierter Fernsprecheinrichtung 5 zum Einsatz in einem Kraftfahrzeug. Die Erfindung ist dabei nicht auf den Einsatz in Kraftfahrzeugen beschränkt, sondern auf beliebige Rundfunkempfänger 1 mit integrierter Fernsprecheinrichtung 5 anwendbar. Im Rundfunkempfänger 1 ist mit der Fernsprecheinrichtung 5 eine Steuerschaltung 10 verbunden, an die fünf in einem Anschlußkasten 120 angeordnete Steckplätze 40,45,50,105,110 angeschlossen sind. Der vierte Steckplatz 105 dient als Lautsprecherausgang und der fünfte Steckplatz 110 dient zur Stromversorgung des Rundfunkempfängers 1. An den ersten Steckplatz 40 ist ein Telefonhandaparat 15 und/oder ein Freisprechmikrophon 30 anschließbar. An den zweiten Steckplatz 45 ist ein CD-Wechsler 35 und/oder eine Infrarot-Fernbedienung 20 anschließbar. An den dritten Steckplatz 50 ist ein NF-Verstärker 25 anschließbar. In Figur 1 ist ein erstes Verbindungskabel 80 dargestellt, in dem eine erste und eine dritte Verbindungsleitung 75,77 von insgesamt neun Verbindungsleitungen geführt sind. Die beiden Verbindungsleitungen 75,77 münden in eine erste Steckkontaktanordnung 55 zum Anschluß an den ersten Steckplatz 40 des Rundfunkempfängers 1. An ihrem der ersten Steckkontaktanordnung 55 abgewandten Ende ist die erste Verbindungsleitung 75 direkt mit dem Telefonhandapparat 15 verbunden. Die dritte Verbindungsleitung 77 weist an ihrem der ersten Steckkontaktanordnung 55 abgewandten Ende einen vierten Steckplatz 65 auf. Ein erster Gegenstecker 66 zum Anschluß an den vierten Steckplatz 65 ist über eine achte Verbindungsleitung 135 mit dem Freisprechmikrophon 30 verbunden. Ein zweites Verbindungskabel 81 umfaßt eine zweite Verbindungsleitung 76 und eine vierte Verbindungsleitung 78. Die zweite und die vierte Verbindungsleitung 76,78 münden in einer zweiten Steckkontaktanordnung 60 zum Anschluß an den zweiten Steckplatz 45 des Rundfunkempfängers 1. Die zweite Verbindungsleitung 76 ist an ihrem der zweiten Steckkontaktanordnung 60 abgewandten Ende direkt mit der Infrarot-Fernbedienung 20 verbunden. Die vierte Verbindungsleitung 78 weist an ihrem der zweiten Steckkontaktanordnung 60 abgewandten Ende einen fünften Steckplatz 70 auf. Ein zweiter Gegenstecker 71 zum Anschluß an den fünften Steckplatz 70 ist über eine fünfte Verbindungsleitung 79 mit einem sechsten Steckplatz 85 verbunden, der einen dreizehnpoligen DIN-Steckplatz darstellt. Über eine erste externe Zuleitung 90 ist dem sechsten Steckplatz 85 ein positives Versorgungsspannungspotential und über eine zweite externe Zuleitung 95 ein Bezugspotential zugeführt. Ein dreizehnpoliger DIN-Gegenstecker 86 zum Anschluß an den sechsten Steckplatz 85 ist über eine neunte Verbindungsleitung 140 direkt mit dem CD-Wechsler 35 verbunden. Der zweite Gegenstecker 71 ist außerdem über eine sechste Verbindungsleitung 125 mit einem siebten Steckplatz 115 verbunden. Die fünfte und die sechste Verbindungsleitung 79, 125 werden in einem dritten Verbindungskabel 82 geführt. In Figur 1 ist auch eine Verbindungsleitung nach dem Stand der Technik dargestellt. Dabei ist eine dritte Steckkontaktanordnung 100 über eine siebte Verbindungsleitung 130 mit dem NF-Verstärker 25 verbunden, dem außerdem über eine erste externe Zuleitung 90 ein positives Betriebsspannungspotential und über eine zweite externe Zuleitung 95 ein Bezugspotential zugeführt ist.

Gemäß dem dargestellten Ausführungsbeispiel sind der Telefonhandaparat 15 und die Infrarot-Fernbedienung 20 zum direkten Anschluß über die erste und die zweite Steckkontaktanordnung 55,60 an den Rundfunkempfänger 1 vorgesehen. Möglich wäre jedoch auch der direkte Anschluß des Freisprechmikrophons 30 und des CD-Wechslers 35 über den ersten bzw. den zweiten Gegenstecker 66,71, wobei bei dem CD-Wechsler 35 die Stromzuführung und der dreizehnpolige DIN-Anschluß zu berücksichtigen ist. Durch Anschluß weiterer in Figur 1 nicht dargestellter Verbindungskabel insbesondere an den noch freien siebten Steckplatz 115 lassen sich weitere Kaskadierungen realisieren und weitere Komponenten anschließen. So könnten beispielsweise über weitere erfindungsgemäße Verbindungskabel auch eine Datenschnittstelle, eine Geräteeinheit zur Verarbeitung von über TMC (Traffic message channel) ausgestrahlten Verkehrsdurchsagen und/oder ein Navigationssystem an den siebten Steckplatz 115 angeschlossen werden.

Die Spannungsversorgung erfolgt größtenteils direkt aus dem Rundfunkempfänger 1, nur einige Komponenten, wie der CD-Wechsler 35 und der NF-Verstärker 25 besitzen einen eigenen Betriebsspannungsanschluß, wobei dem CD-Wechsler 35 die Stromversorgung über die neunte Verbindungsleitung 140, die eine dreizehnpolige DIN-Verbindungsleitung darstellt, zugeführt ist. Die Stromversorgung der übrigen Komponenten 15,20,30 erfolgt über die entsprechend zugehörigen Verbindungsleitungen 75,76,77.

An den zweiten Steckplatz 45 ist standardmäßig das Freisprechmikrophon 30 angeschlossen. Eine entsprechende Detektion seitens der Steuerschaltung 10 ist daher nicht notwendig. Sollte kein Freisprechmikrophon 30 angeschlossen sein, so ist Freisprechen nicht möglich. Ist an den zweiten Steckplatz 45 der Telefonhandapparat 15 angeschlossen, so wird dies von einer Prüfschaltung in der Steuerschaltung 10 erkannt, wobei die Prüfschaltung das Potential eines Anschlußkontaktes im zweiten Steckplatz 45 auswertet, das vom Anschluß bzw. dem Zustand des Telefonhandapparates 15 abhängt. Auf diese Weise erfolgt bei gewählter Option Freisprechen in einem Bedienmenü des Rundfunkempfängers 1 bei angeschlossenem und abgehobenem Telefonhandapparat 15 automatisch eine Umschaltung vom Freisprechmikrophon 30 auf den Telefonhandapparat 15. Da der NF-Verstärker 25 ebenfalls standardmäßig an den dritten Steckplatz 50 angeschlossen ist, ist auch hier keine Detektion seitens der Steuerschaltung 10 erforderlich. Der Anschluß von Komponenten an den zweiten Steckplatz 45 hingegen erfordert eine Detektion seitens der Steuerschaltung 10. Dazu ist ein Datenaustausch zwischen den dort angeschlossenen Komponenten, nämlich der Infrarot-Fernbedienung 20 und dem CD-Wechsler 35 einerseits, und der Steuerschaltung 10 andererseits erforderlich, wobei der Datenaustausch der Detektion des CD-Wechslers 35 und der Infrarot-Fernbedienung (20) in der Steuerschaltung 10 und der Ansteuerung des CD-Wechslers 35 und der Infrarot-Fernbedienung 20 durch die Steuerschaltung 10 dient. Wenn über die Verbindungsleitungen Stromversorgung und/oder Datenaustausch abgewickelt werden, so sind sie entsprechend mehrpolig auszuführen.

Die Funktionsweise der Steuerschaltung 10 zur Detektion und Ansteuerung von Komponenten ist gemäß Figur 2 in einem Ablaufplan dargestellt. Nach Betätigen der Zündung und Einschalten des Rundfunkempfängers 1 wird über das zweite Verbindungskabel 81 bei Programmpunkt 200 eine Meldung an den CD-Wechsler 35 gesendet. Bei einem Programmpunkt 210 wird geprüft, ob der CD-Wechsler 35 auf die Meldung geantwortet hat. Ist dies der Fall, so wird zu Programmpunkt 220 verzweigt, andernfalls wird zu Programmpunkt 200 verzweigt. Bei Programmpunkt 200 wird dann erneut eine Meldung an den CD-Wechsler 35 gesendet. Meldet er sich nach drei Versuchen nicht, so wird er als nicht angeschlossen detektiert und damit auch nicht angesteuert. Ein entsprechendes, den Anschluß des CD-Wechslers 35 charakterisierendes Symbol am Bedienmenü des Rundfunkempfängers 1 wird dann nicht eingeblendet. Bei Programmpunkt 200 wird dann eine Meldung an eine andere Komponente, in diesem Fall an die Infrarot-Fernbedienung 20 abgesendet, um zu überprüfen, ob sie angeschlossen ist. Bei Programmpunkt 220 wird eine als angeschlossen detektierte Komponente von der Steuerschaltung 10 konfiguriert. Bei Programmpunkt 230 wird geprüft, ob die entsprechende Komponente auf die Konfiguration antwortet. Ist dies der Fall, so wird zu Programmpunkt 240 verzweigt, andernfalls wird zu Programmpunkt 270 verzweigt. Bei Programmpunkt 240 wird geprüft, ob die Konfiguration erfolgreich verlief. Ist dies der Fall, so wird zu Programmpunkt 260 verzweigt, andernfalls wird zu Programmpunkt 270 verzweigt. Die Konfiguration, bei der der Datenaustausch mit einer Übertragungsgeschwindigkeit von 4800 Bd erfolgt, ist insbesondere dann erfolgreich verlaufen, wenn die entsprechende Komponente für einen Datenaustausch mit doppelter Übertragungsgeschwindigkeit, also mit 9600 Bd, vorbereitet ist. Bei Programmpunkt 260 erfolgt eine Umschaltung der Übertragungsgeschwindigkeit auf 9600 Bd durch die Steuerschaltung 10. Bei Programmpunkt 270 erfolgt je nach Detektion und Konfiguration eine entsprechende Anzeige am Bedienmenü des Rundfunkempfängers 1. Bei Programmpunkt 280 wird geprüft, ob es noch Komponenten gibt, deren Anschluß noch nicht abgefragt wurde. Ist dies der Fall, so wird zu Programmpunkt 200 verzweigt und der beschriebene Funktionsablauf erneut durchgeführt. Andernfalls ist die Detektion und Initialisierung durch die Steuerschaltung 10 abgeschlossen, so daß die Steuerschaltung 10 die angeschlossenen und detektierten Komponenten mit einer Übertragungsgeschwindigkeit von 9600 Bd ansteuern kann.

## Patentansprüche

1. Verbindungskabel (80, 81) zum Anschluß von Komponenten (15, 20, 30, 35) an einen Rundfunkempfänger (1) mit integrierter Fernsprecheinrichtung (5), dadurch gekennzeichnet, daß das Verbindungskabel (80, 81) eine Steckkontaktanordnung (55, 60) zum Anschluß der Komponenten (15, 20, 30, 35) an einen entsprechenden Steckplatz (40, 45) des Rundfunkempfängers (1) aufweist, daß das Verbindungskabel (80, 81) mehrere vorzugsweise mehrpolige Verbindungsleitungen (75, 76, 77, 78) zum Anschluß der Komponenten (15, 20, 30, 35) umfaßt, von denen mindestens eine Verbindungsleitung (77, 78) an ihrem der Steckkontaktanordnung (55, 60) abgewandten Ende einen weiteren Steckplatz (65, 70), insbesondere zum Anschluß eines weiteren Verbindungskabels (82), aufweist.

2. Verbindungskabel (80, 81) nach Anspruch 1, dadurch gekennzeichnet, daß über mindestens eine der Verbindungsleitungen (75, 76, 77, 78) ein Datenaustausch zwischen der angeschlossenen Komponente (20, 35) und einer im Rundfunkempfänger (1) integrierten Steuerschaltung (10) stattfindet, wobei der Datenaustausch der Detektion der Komponente (20, 35) in der Steuerschaltung (10) und der Ansteuerung der Komponente (20, 35) durch die Steuerschaltung (10) dient.

3. Verbindungskabel (80, 81) nach Anspruch 1 oder 2, dadurch gekennzeichnet, daß über mindestens eine der Verbindungsleitungen (75, 76, 77, 78) die Stromversorgung der entsprechend angeschlossenen Komponente (15, 20, 30) erfolgt.

4. Verbindungskabel (82) nach Anspruch 1, 2 oder 3, dadurch gekennzeichnet, daß in mindestens einen weiteren Steckplatz (85) einer Verbindungsleitung (79) eine externe Stromversorgung (90, 95) eingeführt ist.
